# EUROPÄISCHE PATENTSCHRIFT

(11) **EP 1 634 489 B1**
(45) Veröffentlichungstag und Bekanntmachung des Hinweises auf die Patenterteilung: **24.10.2012**
(21) Anmeldenummer: 05019182.4
(22) Anmeldetag: 03.09.2005
(51) Int. Cl.: A01B 63/10, A01B 63/22, A01C 7/00

(54) **Sämaschine**
Seeder
Semoir

(30) Priorität: 09.09.2004 DE 102004043565
(43) Veröffentlichungstag der Anmeldung: 15.03.2006
(73) Patentinhaber: Amazonen-Werke H. Dreyer GmbH & Co. KG, 49205 Hasbergen (DE)
(72) Erfinder: Johannaber, Stefan, Jan, 49536 Lienen (DE)

(56) Entgegenhaltungen:
- EP-A- 1 285 564
- EP-A- 1 417 876
- EP-A- 1 529 432
- DE-A1- 19 644 751
- DE-U1- 29 910 414
- GB-A- 2 177 885
- GB-A- 2 197 573
- US-B1- 6 701 857

## Beschreibung

Die Erfindung betrifft eine Sämaschine gemäß des Oberbegriffes des Anspruches 1.

Die US-B-6 701 857 offenbart eine Sämaschine mit einem Scharbalken, der mit einem hydraulischen Stellelement verdrehbar ist. Durch das verdrehen des Scharbalkens in eine Richtung sind die Säschare in Richtung des Bodens mit Federkraft beaufschlagbar und durch verdrehen in die entgegen gesetzte Richtung aus dem und/oder vom Boden aus- oder anhebbar.

Weitere Sämaschinen sind bekannt. Um die Säschare in Richtung des Bodens federnd zu belasten, sind zwischen dem Scharhalter und dem Rahmen federnde Elemente angeordnet. Um für die Säschare beim Ausheben aus dem Boden einen ausreichend großen Abstand zu erhalten, sind beim Stand der Technik auf der Vorderseite des Rahmens Kupplungselemente angeordnet, mittels welchem die gesamte Sämaschine um eine quer zur Fahrtrichtung verlaufende Achse verschwenkbar ist, so dass die Säschare neben dem Ausheben durch den Dreipunktkraftheber durch Verschwenken der Maschine vom Boden abgehoben werden. Das gesamte Verdrehen der Sämaschine ist nachteilig und aufwendig.

Der Erfindung liegt die Aufgabe zugrunde, eine einfachere Verschwenkung der Säschare zur Vergrößerung des Abstandes zum Boden zum Zwecke des Abhebens vom Boden vorzuschlagen.

Diese Aufgabe wird erfindungsgemäß durch die Merkmale des Anspruches 1 gelöst. Infolge dieser Maßnahmen wird es durch die verdrehbare Lagerung des Scharbalkens in einfacher Weise möglich, die Säschare durch Verdrehen des Scharbalkens aus dem Boden aus oder vom Boden abzuheben. Gleichzeitig können durch die integrierte federnde Gummilagerung der Schare an dem Scharbalken durch entsprechendes entgegengesetztes Verdrehen des Scharbalkens die Säschare in Richtung des Bodens mit der gewünschten Federkraft beaufschlagt werden.

Außerdem wird bei einer Sämaschine mit großer Arbeitsbreite, bei der die Seitenrahmen einklappbar sind eine schmale Transportbreite erreicht.

In einfacher Weise lässt sich die Größe der Federkraftbeaufschlagung dadurch einstellen, dass dem Stellelement ein einstellbarer Anschlag zur Einstellung des max. Hubweges des Stellelementes zugeordnet ist. Infolge dieser Maßnahmen lässt sich die gewünschte Federkraft mittels welcher die Säschare in Richtung des Bodens beaufschlagt werden, voreinstellen.

Eine vorteilhafte Führung der Säschare gegenüber dem Scharbalken und der Bodenoberfläche wird dadurch erreicht, dass die Säschare mittels eines unteren Scharhalters und einer oberen Lenkerstrebe, die eine parallelogrammähnliche Anordnung bilden, angelenkt sind.

Weitere Einzelheiten der Erfindung sind der Beispielsbeschreibung und den Zeichnungen zu entnehmen. Hierbei zeigen
- Fig. 1: die Sämaschine mit ausgeklappten Seitenrahmen in der Draufsicht,
- Fig. 2: die Sämaschine in Transportstellung mit eingeklappten Seitenrahmen in der Draufsicht und in vergrößertem Maßstab,
- Fig. 3: die Sämaschine in Transportstellung mit eingezogenen Säscharen in der Draufsicht,
- Fig. 4: die an dem Seitenrahmen angeordneten Säschare in unterster Position und in Seitenansicht,
- Fig. 5: die Säschare in Arbeitsstellung und in Seitenansicht,
- Fig. 6: die Säschare in angehobener bzw. eingezogener Position in Seitenansicht,
- Fig. 7: das Stellelement zum Verdrehen des Scharbalkens in der Ansicht VII - VII,
- Fig. 8: das Stellelement in Seitenansicht,
- Fig. 9: am Seitenrahmen angeordnete Säschare in unterster Stellung in Seitenansicht,
- Fig. 10: am Seitenrahmen angeordnete Säschare gemäß Fig. 9 in Arbeitsstellung in Seitenansicht und
- Fig. 11: die Säschare gemäß Fig. 9 in ausgehobener bzw. eingezogener Position in Seitenansicht.

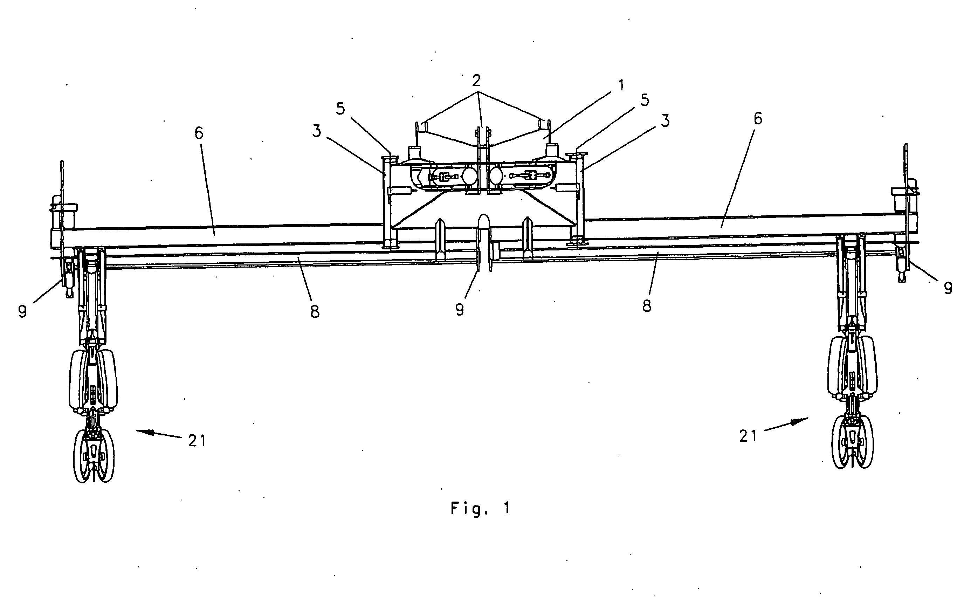

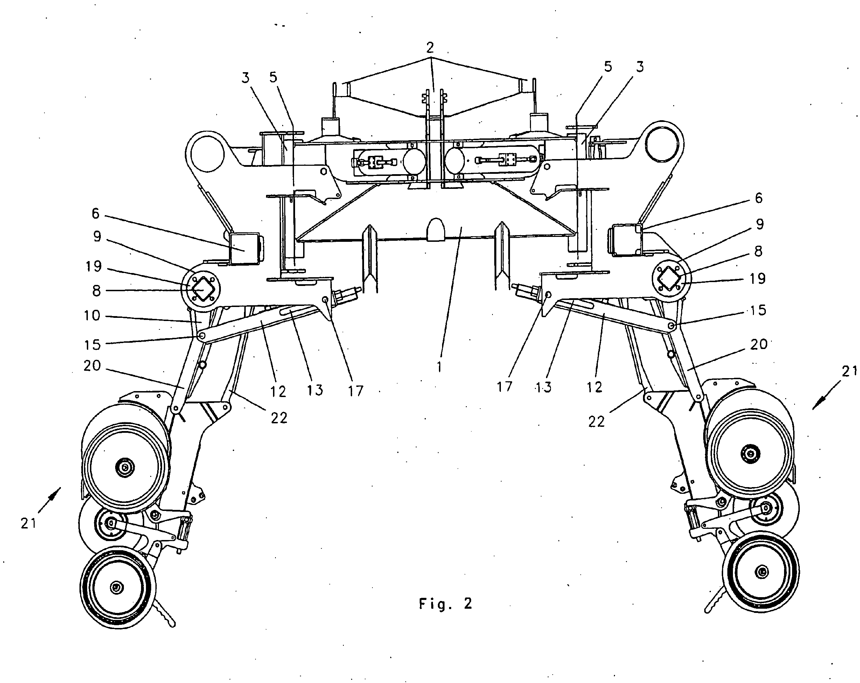

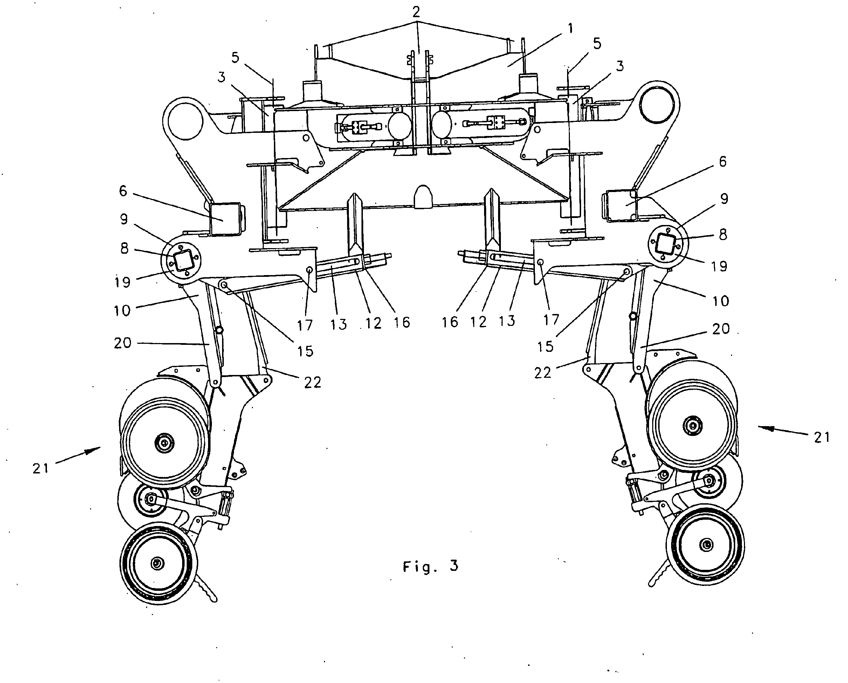

Die Sämaschine weist den Rahmen 1 auf. Auf der Vorderseite des Rahmens 1 sind Dreipunktkupplungselemente 2 zum Anbau des Rahmens 1 an den Dreipunkkraftheber eines Ackerschleppers angeordnet. An den Rahmen 1 sind mittels der Gelenke 3, die jeweils eine in Fahrtrichtung 4 weisende Schwenkachse 5 aufweisen, die Seitenrahmen 6 angeordnet. Zwischen dem Rahmen 1 und dem jeweiligen Seitenrahmen 6 sind die doppeltwirkenden Hydraulikzylinder 7 angeordnet, mittels welchem die Seitenrahmen 6 aus der in Fig. 1 dargestellten Position, in welcher sich die Seitenrahmen 6 quer zur Fahrtrichtung 4 in horizontaler Lage erstrecken, in die in den Fig. 2 und 3 dargestellte aufrechte Position zum Zwecke des Transportes zu verschwenken.

An den Seitenrahmen 6 ist jeweils ein Scharbalken 8 mittels der Lager 9 verdrehbar gelagert. An jedem Seitenrahmen 6 ist ein Scharbalken 8 angeordnet, so dass der Scharbalken 8 aus zwei Teilen besteht. Jeder Teil des Scharbalkens 8 ist an dem zugeordneten Seitenrahmen 6 verdrehbar gelagert. An dem jeweils äußeren Ende des Scharbalkens 8 ist ein Hebel 10 angeordnet. Zwischen dem äußeren Ende 11 des Hebels 10 und dem Seitenrahmen 6 ist das als doppeltwirkender Hydraulikzylinder 11 ausgebildete motorische Stellelement angeordnet, mittels welchem der Scharbalken 8 verdrehbar ist. Dem Hydraulikzylinder 11 ist die Strebe 12, in welcher ein Langloch 13 angeordnet ist, zugeordnet. Die Strebe 12 ist an ihrem einen Ende 14 auf dem Bolzen 15 angeordnet, mit dem der Hydraulikzylinder 11 mit dem an dem Scharbalken 8 angeordneten Hebel 10 verbunden ist. In das Langloch 13 der Strebe 12 greift der auf der anderen Seite 16 des Stellelementes 11 angeordnete Bolzen 17, mit dem die andere Seite 16 des Stellelementes 11 mit dem Seitenrahmen 6 verbunden ist. Auf der Seite 16, auf welcher das Langloch 13 in der Strebe 12 angeordnet ist, ist eine als Schraubspindel 18 ausgebildeter Anschlag angeordnet, der an dem Hydraulikzylinder 11 zur Anlage kommt. Mittels dieser als einstellbarer Anschlag ausgebildete Schraubspindel 18 ist der maximale Hubweg des Stellelementes 11 einstellbar. Hierüber kann der Verschwenkweg 8 des Scharbalkens 8 und max. mögliche Schardruck begrenzt werden.

Auf dem Scharbalken 8, der als Quadratrohr ausgebildet ist, sind mittels einer Gummifederlagerung 19 die unteren Scharhalter 20 der Säschare 21 federnd gelagert. Um eine parallelogrammähnliche Anordnung der Säschare 21 zu erhalten, sind die Säschare 21 weiterhin mittels einer oberen Lenkerstrebe 22 an dem Rahmen 6 angelenkt. An dem Scharbalken 8 sind mehrere Säschare 21 beabstandet zueinander angeordnet, wobei in Fig. 1 für jeden Seitenrahmen 6 nur ein Säschar 21 eingezeichnet ist.

Durch Verschwenken des Scharbalkens 8 über das motorische Stellelement 11 können die Säschare 21 mit Federdruck nach unten über die Gummilagerung 19 beaufschlagt werden. Die entsprechende federnde Belastung der Säschare 21 in Richtung des Bodens lässt sich mit dem vorbeschriebenen Anschlag 18 einstellen. Somit sind mittels der Hydraulikzylinder 11 die Scharhalter 20 und die Säschare 21 in Richtung des Bodens mit Federkraft beaufschlagbar. Andererseits lassen sich durch das Verdrehen des Scharbalkens 8 in Pfeilrichtung 22 die Säschare 21 vom Boden aus- oder abheben und gleichzeitig hierdurch einziehen, so dass sie in Transportstellung aus der in Fig. 2 dargestellten äußeren Position in die in Fig. 3 dargestellte Position nach innen eingezogen werden, um so eine möglichst schmale Transportbreite zu erhalten.

Der Vorteil des einstellbaren Anschlages 18 der Strebe 12 ist insbesondere bei zwei oder mehr geteilten Scharbalken 8, mit mehreren Stellelementen 11 gegeben, weil über den Anschlag 18 für alle Scharbalken und somit alle Säschare 21 der gleiche Verstellweg und somit der entsprechende Schardruck einstellbar ist.

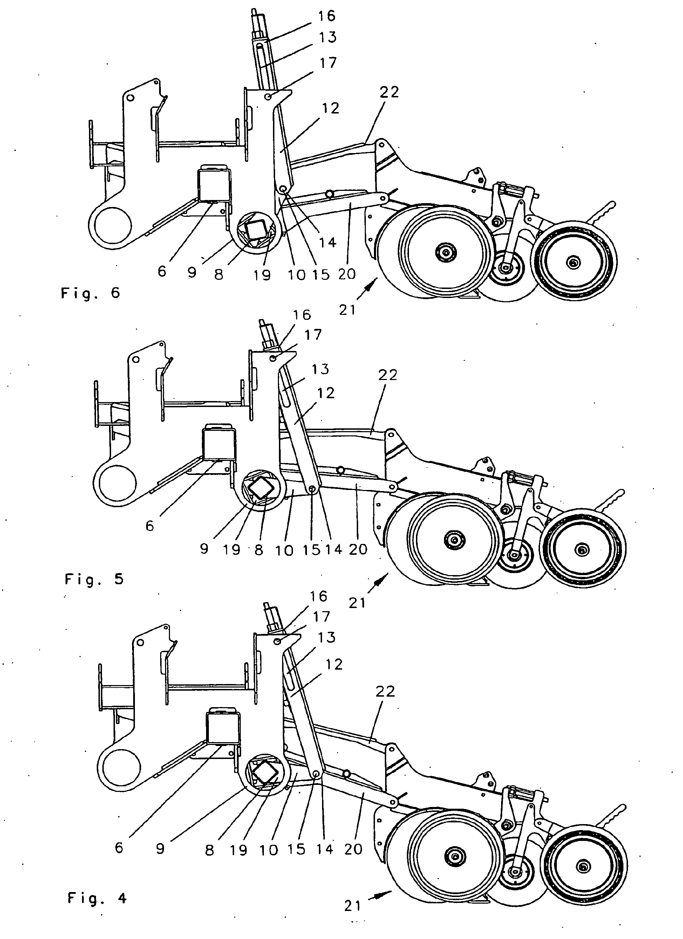

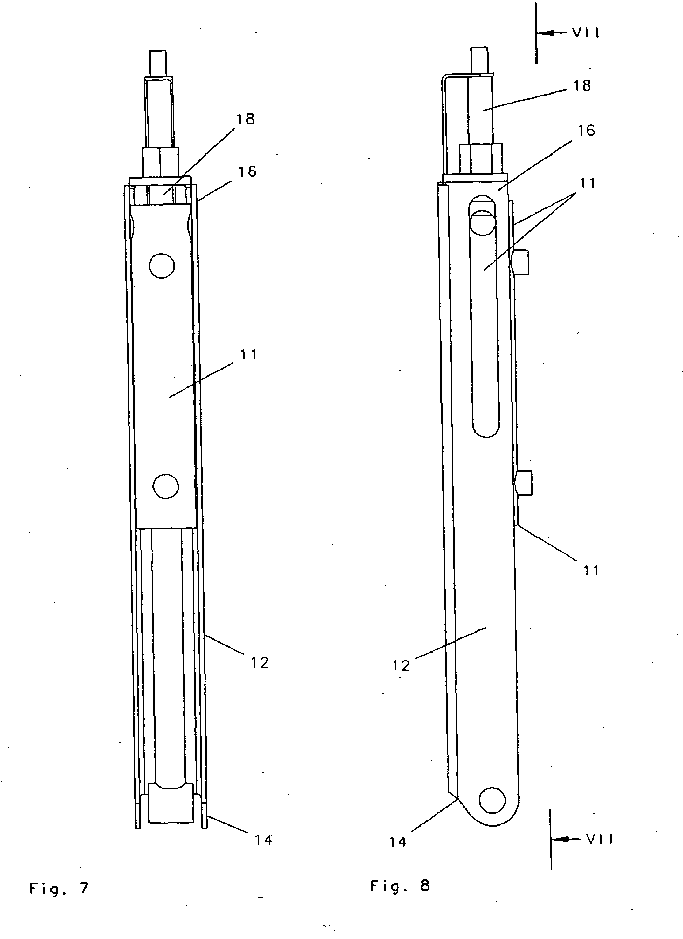

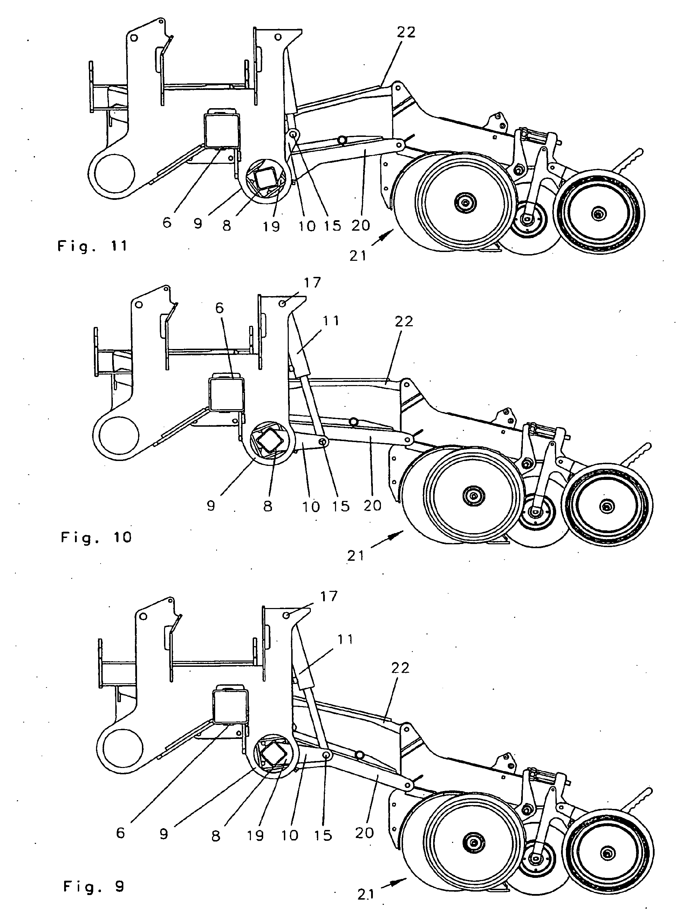

Die Säschare 21 gemäß den Fig. 9-11 unterscheiden sich von der Anordnung der Säschare 21 gemäß den Fig. 1-8 dadurch, dass dem Hydraulikzylinder 11 keine Strebe 12 zugeordnet ist. Die max. Verdrehung des Scharbalkens 8 über den doppeltwirkenden Hydraulikzylinder 11 erfolgt durch die entsprechende Längenauswahl des Hydraulikzylinders 11.

## Patentansprüche

1. Sämaschine mit einem Rahmen (1, 6), an dem ein quer zur Fahrtrichtung (4) und horizontal verlaufender Scharbalken (8) um seine Längsachse mittels eines, vorzugsweise motorischen Stellelementes (11) verdrehbar angeordnet ist, wobei an dem Scharbalken (8) mehrere Säichare (21) beabstandet zneinarder angeordnet sind, wobei Scharhalter (20) der Säschare (21) federbelastet an dem Scharbalken (8) angelenkt sind, wobei durch Verdrehen des Scharbalkens (8) mittels des Stellelementes (11) in die eine Richtung die Scharhalter (20) und Säschare (21) in Richtung des Bodens mit Federkraft beaufschlagbar und durch Verdrehen in die entgegengesetzte Drehrichtung die Säschare (21) aus dem und/oder vom Boden aus- und/oder anhebbar sind, **dadurch gekennzeichnet, dass** die Scharhalter (20) der Säschare (21) mittels einer federnden Gummilagerung (19) an dem Scharbalken (8) angelenkt sind, dass der Scharbalken (8) aus zwei Teilen besteht, wobei jeder Teil des Scharbalkens (8) an einem Seitenrahmen (6) verdrehbar gelagert und jedem Teil des Scharbalkens (8) ein motorisches Stellelement (11) zugeordnet ist, und dass jeder der Seitenrahmen (6) mittels eines eine in Fahrtrichtung (4) weisende Gelenkachse aufweisendes Gelenks (3) am Rahmen (1) angelenkt ist, und dass zwischen dem Seitenrahmen und dem Rahmen jeweils ein weiteres motorisches Stellelement angeordnet ist.

2. Sämaschine nach Anspruch 1, **dadurch gekennzeichnet, dass** dem Stellelement (11) ein einstellbarer Anschlag (18) zur Einstellung des max. Hubweges des Stellelementes (11) zugeordnet ist.

3. Sämaschine nach Anspruch 1, **dadurch gekennzeichnet, dass** die Säschare (21) mittels eines unteren Scharhalters (20) und einer oberen Lenkerstrebe (22), die eine parallelogrammähnliche Anordnung bilden, angelenkt sind.

## Claims

1. Seed drill having a frame (1, 6) on which a coulter bar (8) that extends transversely to the direction of travel (4) and horizontally is arranged so as to be rotatable about its longitudinal axis by means of a, preferably motor-driven, actuator element (11), wherein a plurality of sowing coulters (21) are arranged in a manner spaced apart from one another on the coulter bar (8), wherein coulter holders (20) of the sowing coulters (21) are articulated to the coulter bar (8) in a spring-loaded manner, wherein, by rotating the coulter bar (8) in one direction by means of the actuator element (11), the coulter holders (20) and the sowing coulters (21) can be biased by spring force in the direction of the ground, and by rotating in the opposite direction, the sowing coulters (21) can be lifted out of and/or raised from the ground, **characterized in that** the coulter holders (20) of the sowing coulters (21) are articulated to the coulter bar (8) by means of a resilient rubber bearing (19), **in that** the coulter bar (8) consists of two parts, wherein each part of the coulter bar (8) is mounted in a rotatable manner on a side frame (6) and each part of the coulter bar (8) is assigned a motor-driven actuator element (11), and **in that** each of the side frames (6) is articulated to the frame (1) by means of a joint (3) having a joint axis directed in the direction of travel (4), and **in that** in each case a further motor-driven actuator element is arranged between the side frame and the frame.

2. Seed drill according to Claim 1, **characterized in that** the actuator element (11) is assigned a settable stop (18) for setting the maximum lifting travel of the actuator element (11).

3. Seed drill according to Claim 1, **characterized in that** the sowing coulters (21) are articulated by means of a lower coulter holder (20) and an upper steering strut (22), which form a parallelogram-like arrangement.

## Revendications

1. Semoir avec un châssis (1, 6), sur lequel une barre à socs (8) s'étendant horizontalement et transversalement à la direction de déplacement (4) est disposée de façon rotative autour de son axe longitudinal au moyen d'un élément de réglage (11), de préférence motorisé, dans lequel plusieurs distributeurs (21) sont disposés à distance l'un de l'autre sur la barre à socs (8), dans lequel des porte-socs (20) à ressort des distributeurs (21) sont articulés sur la barre à socs (8), dans lequel les porte-socs (20) et les distributeurs (21) peuvent être soumis à une force de ressort en direction du sol par rotation de la barre à socs (8) dans une première direction au moyen de l'élément de réglage (11) et les distributeurs (21) peuvent être relevés hors et/ou soulevés du sol par rotation dans la direction de rotation opposée, **caractérisé en ce que** les porte-socs (20) des distributeurs (21) sont articulés sur la barre à socs (8) au moyen d'un palier élastique en caoutchouc (19), **en ce que** la barre à socs (8) se compose de deux parties, dans lequel chaque partie de la barre à socs (8) est montée de façon rotative sur un châssis latéral (6) et un élément de réglage motorisé (11) est associé à chaque partie de la barre à socs (8), et **en ce que** chacun des châssis latéraux (6) est articulé sur le châssis (1) au moyen d'une articulation (3) présentant un axe d'articulation orienté dans la direction de déplacement (4), et **en ce qu'**un autre élément de réglage motorisé est chaque fois disposé entre le châssis latéral et le châssis.

2. Semoir selon la revendication 1, **caractérisé en ce qu'**une butée réglable (18) est associée à l'élément de réglage (11) pour le réglage de la course de levage maximale de l'élément de réglage (11).

3. Semoir selon la revendication 1, **caractérisé en ce que** les distributeurs (21) sont articulés au moyen d'un porte-socs inférieur (20) et d'une bielle supérieure (22), qui forment un agencement de type parallélogramme.
